# EUROPÄISCHE PATENTSCHRIFT

(11) **EP 4 564 352 B1**
(45) Veröffentlichungstag und Bekanntmachung des Hinweises auf die Patenterteilung: **31.12.2025**
(21) Anmeldenummer: 23212620.1
(22) Anmeldetag: 28.11.2023
(51) Int. Cl.: G10L 21/10, G06T 13/40

(54) **VERFAHREN ZUR SYNCHRONISATION VON LIPPENBEWEGUNGEN UND AKUSTISCHER AUSGABE EINES INHALTS DURCH EINEN AVATAR**
METHOD FOR SYNCHRONIZING LIP MOVEMENTS AND ACOUSTIC CONTENT OUTPUT BY AN AVATAR
PROCÉDÉ DE SYNCHRONISATION DE MOUVEMENTS DE LÈVRES ET DE SORTIE ACOUSTIQUE D'UN CONTENU PAR UN AVATAR

(43) Veröffentlichungstag der Anmeldung: 04.06.2025
(73) Patentinhaber: goAVA GmbH, 40479 Düsseldorf (DE)
(72) Erfinder: SCHELLENBERGER, Jan, Schwerin, 19055 (DE)
(74) Vertreter: Von Rohr Patentanwälte Partnerschaft mbB

(56) Entgegenhaltungen:
- US-A1- 2019 392 625
- US-A1- 2023 230 303
- REN C LUO ET AL: "Speech synchronization between speech and lip shape movements for service robotics applications", IECON 2011 - 37TH ANNUAL CONFERENCE ON IEEE INDUSTRIAL ELECTRONICS SOCIETY, IEEE, 7 November 2011 (2011-11-07), pages 2261 - 2266, XP032104832, ISBN: 978-1-61284-969-0, DOI: 10.1109/IECON.2011.6119661

## Beschreibung

Die vorliegende Erfindung betrifft ein Verfahren zur Synchronisation von Lippenbewegungen und akustischer Ausgabe eines Inhalts durch einen Avatar gemäß dem Oberbegriff von Anspruch 1, eine Vorrichtung zur Datenverarbeitung, ein Computerprogramm und einen computerlesbaren Datenträger.

Bei üblichen Verfahren wird zunächst ein auszusprechender Inhalt erzeugt und die Aussprache des Inhalts wird berechnet, simuliert und/oder erstellt. Im Anschluss kann auf Grundlage der Aussprache des Inhalts die Lippenbewegung des Avatars berechnet werden.

So offenbart beispielsweise die DE 10 2007 042 583 B4 ein Verfahren zur Kommunikation zwischen einer natürlichen Person und einem künstlichen Sprachsystem. Es wird zunächst ein auszusprechender Inhalt erzeugt. Die korrekte phonetische Aussprache von Wörtern ist dabei in einem Sprachsystem gespeichert. Anhand der korrekten phonetischen Aussprache der Wörter kann die Lippenbewegung des Avatars an die korrekte Aussprache der Wörter angepasst werden.

Die Anpassung der Lippenbewegung an die korrekte Aussprache der Wörter ist in der Regel sehr zeitaufwendig und erfordert eine hohe Rechenleistung eines Computers bzw. einer Vorrichtung zur Datenverarbeitung. Für eine entsprechende Anpassung der Lippenbewegungen an den auszusprechenden Inhalt ist in der Regel eine lange Bearbeitungszeit, von bis zu mehreren Minuten, notwendig. Entsprechende Verfahren sind daher nicht dazu geeignet, eine unterbrechungsfreie Kommunikation zwischen einem Nutzer und dem Avatar bereitzustellen.

Der vorliegenden Erfindung liegt die Aufgabe zugrunde, ein im Vergleich zum Stand der Technik verbessertes Verfahren zur Synchronisation von Lippenbewegungen und akustischer Ausgabe eines Inhalts durch einen Avatar bereitzustellen, wobei eine schnelle und zeitnahe akustische Ausgabe eines Inhalts mit synchronen visuell ausgegebenen Lippenbewegungen durch den Avatar ermöglicht oder unterstützt wird, wobei eine besonders einfache, benutzerfreundliche und/oder intuitive Kommunikation geschaffen oder unterstützt wird.

Die der vorliegenden Erfindung zugrunde liegende Aufgabe wird durch das Verfahren gemäß Anspruch 1, die Vorrichtung zur Datenverarbeitung gemäß Anspruch 13, das Computerprogramm gemäß Anspruch 14 oder den computerlesbaren Datenträger gemäß Anspruch 15 gelöst.

Die vorliegende Erfindung betrifft ein, insbesondere computerimplementiertes, Verfahren zur Synchronisation von Lippenbewegungen und akustischer Ausgabe eines Inhalts durch einen Avatar.

Unter dem Begriff "Avatar" sind im Rahmen der vorliegenden Erfindung digitale Wesen mit anthropomorphem Aussehen zu verstehen, die von Menschen oder Software gesteuert werden und die Fähigkeit besitzen, zu interagieren.

Vorzugsweise wird bzw. werden das vorschlagsgemäße Verfahren, insbesondere einzelne oder alle Verfahrensschritte des vorschlagsgemäßen Verfahrens, mittels einer Vorrichtung zur Datenverarbeitung (teil-)automatisch bzw. selbsttätig durchgeführt, insbesondere durch entsprechende Mittel zur Datenverarbeitung und Steuerung der Vorrichtung, wie eine Datenverarbeitungseinrichtung oder dergleichen.

Bei dem vorschlagsgemäßen Verfahren zur Synchronisation von Lippenbewegungen und akustischer Ausgabe eines Inhalts durch den Avatar wird zunächst ein auszusprechender Inhalt erzeugt, der durch den Avatar akustisch ausgegeben werden soll.

Das vorschlagsgemäße Verfahren zeichnet sich dadurch aus, dass die Aussprache des zuvor erzeugten Inhalts an eine vorgegebene bzw. hinterlegte Lippenbewegungssequenz des Avatars angepasst wird. Es hat sich gezeigt, dass die Anpassung der Aussprache an eine vorgegebene Lippenbewegungssequenz schneller und mit weniger Rechenleistung erfolgen kann als die im Stand der Technik übliche Anpassung der Lippenbewegung an die phonetische Aussprache des Inhalts. Es ist dann möglich, dass der Avatar innerhalb einer besonders kurzen Zeit, insbesondere von weniger als 1 s, vorzugweise weniger als 0,5 s, als Reaktion auf eine Anfrage durch einen Nutzer einen erzeugten Inhalt mit dazu synchronen Lippenbewegungen ausgibt. Auf diese Weise kann zwischen dem Nutzer und dem Avatar eine unterbrechungsfreie bzw. flüssige Kommunikation erfolgen. Insbesondere kommt es zwischen einer Anfrage eines Nutzers und der Antwort des Avatars nicht zu Wartezeiten, wodurch eine insbesondere zumindest im Wesentlichen pausenfreie und/oder direkte Kommunikation mit dem Avatar ermöglicht wird.

Der Erfindung liegt die Erkenntnis zugrunde, dass lediglich ca. 30 % aller Wörter anhand der bei der Aussprache dieser Wörter erfolgenden Lippenbewegung erkannt werden können. Darüber hinaus lassen sich lediglich ca. 15 (Sprach-)Laute bzw. Phoneme zweifelsfrei einer definierten Lippenstellungen bzw. Visem zuordnen.

Im Rahmen der vorliegenden Erfindung ist unter dem Begriff "Phonem" die kleinste bedeutungsunterscheidende sprachliche Einheit bzw. die abstrakte Klasse aller Laute, die in einer gesprochenen Sprache die gleiche bedeutungsunterscheidende Funktion haben, zu verstehen. Im Rahmen der Erfindung ist unter dem Begriff "Visem" die Mundstellung und/oder Lippenstellung und/oder Lippenbewegung bei der Aussprache eines Phonems bzw. Lautes zu verstehen.

Es ist daher möglich, eine Vielzahl von Lauten (Phonemen) einer einzelnen Lippenstellung (Visem) zuzuordnen. Gleichzeitig können auch mehrere Wörter einer identischen Lippenbewegung zugeordnet werden, ohne dass eine mangelnde Synchronisation zwischen einem ausgesprochenen Inhalt und der Lippenbewegung des Avatars von einem Nutzer erkannt wird.

Zur Anpassung der Aussprache des Inhalts an die vorgegebene Lippenbewegungssequenz kann die Betonung von einzelnen Lauten, Silben, Buchstaben und/oder Wörtern des Inhalts an die vorgegebene Lippenbewegungssequenz angepasst werden. So kann beispielsweise eine Silbe eines Wortes besonders stark betont werden, um mit einer Passage bzw. einem Abschnitt der Lippenbewegungssequenz synchron übereinzustimmen. Insbesondere ist es möglich, einzelne Phoneme derart in ihrer Betonung anzupassen, dass eine Übereinstimmung mit einem Visem der Lippenbewegungssequenz erreicht wird.

Es ist möglich, die Aussprache einzelner Laute bzw. Phoneme zu verändern bzw. anzupassen. Der Buchstabe "R" kann beispielsweise bei der Aussprache unterschiedlich stark gerollt werden. Zur Anpassung an die vorgegebene Lippenbewegungssequenz kann die Aussprache des Buchstabens "R", insbesondere wie stark der Buchstabe gerollt wird, variiert werden, um eine optimale Übereinstimmung mit einem Visem bzw. einer Lippenstellung und/oder einer Lippenbewegung zu erhalten.

Alternativ oder zusätzlich kann die Ausgabegeschwindigkeit von wenigstens einem Laut, einer Silbe, einem Buchstaben und/oder einem Wort an die vorgegebene Lippenbewegungssequenz wenigstens passagenweise angepasst werden. So kann beispielsweise eine erste Silbe eines Wortes schneller ausgegeben werden als die zweite Silbe des Wortes, um eine synchrone Aussprache zu einer Passage der Lippenbewegungssequenz zu erhalten.

Bei einer Veränderung der Ausgabegeschwindigkeit von Tönen, Lauten und/oder gesprochenem Text wird in der Regel auch die Höhe bzw. Frequenz der Ausgabe verändert. Um eine Veränderung der Höhe bzw. Frequenz bei der Ausgabe zu vermeiden, ist vorzugsweise eine Höhen- bzw. Frequenzregelung vorgesehen, die dazu ausgebildet ist, die Höhe bzw. Frequenz der Ausgabe unabhängig von der Ausgabegeschwindigkeit konstant zu halten. Auf diese Weise kann ein besonders natürlich klingendes Klang- bzw. Sprachbild des Avatars erhalten werden.

Um die Aussprache des Inhalts an die vorgegebene Lippenbewegungssequenz weiter bzw. besser anzupassen, kann wenigstens eine Pause zwischen Lauten, Silben und/oder Wörtern eingefügt werden. So kann beispielsweise eine (kurze) Pause zwischen Silben eines Wortes oder zwischen zwei aufeinanderfolgende Wörter eingefügt werden, um die Aussprache an eine Passage der Lippenbewegungssequenz anzugleichen.

Alternativ oder zusätzlich kann eine Pause zwischen Lauten, Wörtern und/oder Silben an die vorgegebene Lippenbewegungssequenz angepasst werden. Beispielsweise kann eine Pause zwischen aufeinander folgende Wörter des Inhalts bedarfsweise verkürzt oder verlängert werden, um eine Synchronisierung zwischen der entsprechenden Passage der Lippenbewegungssequenz und der Aussprache der Wörter zu erhalten.

Des Weiteren ist vorzugsweise vorgesehen, dass definierte Laute, Silben, Buchstaben und/oder Wörter einer definierten Lippenbewegung und/oder definierten Lippenstellung bzw. einem Visem zugeordnet werden. Auf diese Weise werden vorgegebene Bestandteile des auszusprechenden Inhalts definierten Lippenbewegungen und/oder definierten Lippenstellungen zugeordnet, um Übereinstimmungen zwischen der Aussprache des Inhalts und den zugeordneten Lippenbewegungen bzw. Lippenstellungen zu erzeugen.

Besonders bevorzugt wird bzw. werden die Ausgabegeschwindigkeit, Betonung und/oder Pausen zwischen den definierten Lauten, Silben, Buchstaben und/oder Wörtern an die vorgegebene Lippenbewegungssequenz angepasst. Somit wird bzw. werden die Ausgabegeschwindigkeit, Betonung und/oder Pausen insbesondere von Bestandteilen des Inhalts, die sich zwischen den zuvor einer vorgegebenen Lippenbewegung bzw. Lippenstellung zugeordneten Lauten, Silben, Buchstaben und/oder Wörtern befinden, angepasst. Auf diese Weise kann zunächst einzelnen Lippenstellungen und/oder Lippenbewegungen jeweils ein Laut, eine Silbe, ein Buchstabe und/oder ein Wort anhand von entsprechenden Zuordnungskriterien zugeordnet werden. Anschließen und/oder zeitgleich können dann die dazwischen liegenden Bestandteile an die Lippenbewegungssequenz angepasst werden.

Um die Synchronität zwischen der Aussprache des Inhalts und der vorgegebenen Lippenbewegungssequenz zu erhöhen, kann die vorgegebene Lippenbewegungssequenz aus einer Mehrzahl von vorgegebenen Lippenbewegungssequenzen ausgewählt werden. Es ist dann möglich, eine passende bzw. eine am besten geeignete Lippenbewegungssequenz auszuwählen, wie nachfolgend im Einzelnen beschrieben wird.

Insbesondere kann die Auswahl der vorgegebenen Lippenbewegungssequenz in Abhängigkeit von der Länge und/oder Anzahl der Wörter und/oder der Anzahl der Vokale erfolgen. Durch eine Analyse des auszusprechenden Inhalts kann beispielsweise die Anzahl der Vokale des Inhalts bestimmt werden. Basierend auf der vorgenannten Analyse kann dann eine am besten geeignete Lippenbewegungssequenz aus der Mehrzahl von Lippenbewegungssequenzen ausgewählt werden.

Alternativ oder zusätzlich kann die Auswahl der vorgegebenen Lippenbewegungssequenz auch in Abhängigkeit von der Sprache des Inhalts erfolgen. Unter dem Begriff "Sprache" ist im Rahmen der vorliegenden Erfindung eine menschliche (Landes- ) Sprache und/oder ein Dialekt oder dergleichen zu verstehen. So kann beispielsweise für die Synchronisation mit einem Inhalt in einer Sprache eine Lippenbewegungssequenz besser geeignet sein als für eine Synchronisation mit einem Inhalt in einer anderen Sprache. Es ist dann möglich, Inhalte in einer Vielzahl von Sprachen durch den Avatar ausgeben bzw. aussprechen zu lassen. Das Verfahren kann dann für viele verschiedene Sprachen und/oder auch beim Wechseln von Sprachen innerhalb einer Kommunikation verwendet werden.

Der auszusprechende Inhalt wird im Rahmen des erfindungsgemäßen Verfahrens erzeugt. In einer bevorzugen Ausführungsform wird der Inhalt aus einer Mehrzahl von vorgegebenen bzw. hinterlegten Inhaltsbausteinen ausgewählt und/oder generiert. Es ist dann möglich, lediglich inhaltlich kontrollierte bzw. freigegebene Inhaltsbausteinen zu verwenden, um die Ausgabe von objektiv falschen Informationen durch den Avatar zu vermeiden.

Die Anzahl der vorgegebenen Inhaltsbausteine ist vorzugsweise größer als die Anzahl der vorgegebenen Lippenbewegungssequenzen. Da die Aussprache des Inhalts an eine vorgegebene Lippenbewegungssequenz angepasst wird, können mehrere Inhaltsbausteine mit derselben Lippenbewegungssequenz synchronisiert werden. So kann mit einer ausgewählten Anzahl von vorgegebenen Lippenbewegungssequenzen eine deutlich höhere Anzahl von Inhaltsbausteinen synchronisiert werden.

Die Anzahl der vorgegeben Inhaltsbausteine ist vorzugsweise mehr als doppelt so groß, weiter vorzugsweise mehr als viermal so groß, weiter vorzugsweise mehr als zehnmal so groß, weiter vorzugsweise mehr als einhundertmal so groß, weiter vorzugsweise mehr als eintausendmal so groß, wie die Anzahl der vorgegebenen Lippenbewegungssequenzen.

Die vorgegebenen Lippenbewegungssequenzen werden vorzugsweise in wenigstens zwei Kategorien bzw. Gruppen unterteilt. Hier und vorzugsweise sind die vorgegebenen Lippenbewegungssequenzen in eine Gruppe von Kurzsequenzen und in eine Gruppe von Langsequenzen unterteilt. Insbesondere weisen die Kurzsequenzen eine Länge von 1,5 s bis 5 s, vorzugsweise von 1,5 s bis 4 s, weiter vorzugsweise von 2 s bis 3 s, auf. Die Langsequenzen können eine Länge von 5 s bis 15 s, vorzugsweise von 5 s bis 13 s, vorzugsweise von 6 bis 12 s, aufweisen.

Es ist auch möglich, mehr als zwei Gruppen zur Einteilung der Lippenbewegungssequenzen vorzusehen.

Der Inhalt ist vorzugsweise eine Antwort und/oder Reaktion auf einen Eingabeinhalt und/oder ein Teil einer Antwort und/oder Reaktion auf einen Eingabeinhalt bzw. weist eine Antwort und/oder eine Reaktion und/oder einen Teil einer Antwort und/oder Reaktion auf einen Eingabeinhalt auf.

Unter dem Begriff "Eingabeinhalt" ist im Rahmen der Erfindung eine Information zu verstehen, die akustisch und/oder visuell darstellbar und/oder maschinenlesbar ist. So kann es sich bei dem Eingabeinhalt und/oder der Information beispielsweise um gesprochenen oder geschriebenen Text, Töne, Laute, Gesten oder dergleichen handeln. Hier und vorzugsweise handelt es sich bei dem Eingabeinhalt insbesondere um eine Frage, Bitte, Aussage und/oder Aufforderung, die akustisch vom Nutzer artikuliert wird.

Somit eignet sich das Verfahren insbesondere zur Ausgabe einer Reaktion auf einen Eingabeinhalt, insbesondere einer Frage, den ein Nutzer eingibt bzw. stellt. Da die Inhaltsbausteine vorzugsweise vorgegeben sind, kann sichergestellt werden, dass lediglich objektiv richtige Inhalte als Reaktion bzw. Antwort auf einen Eingabeinhalt ausgegeben werden.

Der Eingabeinhalt des Nutzers wird vorzugsweise in Sprachform eingegeben und in einen Eingabetext und/oder einen Binärcode umgewandelt. Der Eingabeinhalt des Nutzers liegt dann als geschriebener bzw. maschinenlesbarer Eingabetext bzw. als Binärcode vor. Der Eingabetext bzw. Binärcode kann dann in einfacher Weise verarbeitet, analysiert und/oder ausgewertet werden.

Alternativ ist es auch möglich, dass der Eingabeinhalt in Textform als Eingabetext eingegeben wird. Der Eingabetext kann in einen Binärcode umgewandelt werden. Eine Weiterverarbeitung, Analyse und/oder Auswertung kann anschließend erfolgen.

Der Eingabeinhalt wird anschließend anhand von Wörtern, Ausdrücken und/oder Synonymen analysiert, insbesondere mittels eines Large Language Models (LLM). Auf diese Weise kann der Eingabeinhalt bzw. der Eingabetext analysiert, ausgewertet und/oder logisch verstanden werden.

Auf Grundlage der durchgeführten Analyse kann ein vorgegebener Inhaltsbaustein oder ein Teil bzw. Teile hiervon ausgewählt werden. Es ist auch möglich, dass mehrere vorgegebene Inhaltsbausteine ausgewählt werden. Mittels der ausgewählten Inhaltsbausteie kann dann der auszusprechende Inhalt erzeugt werden, beispielsweise durch eine Aneinanderreihung und/oder Verschachtelung von vorgegebenen Inhaltsbausteinen.

Die vorgegebenen Inhaltsbausteine werden vorzugsweise in wenigstens zwei thematische Kategorien unterteilt. Anhand des Eingabeinhalts bzw. der Analyse des Eingabeinhalts bzw. Eingabetexts kann eine Kategorie zur Auswahl eines vorgegebenen Inhaltsbausteins aus dieser Kategorie ausgewählt werden. So kann beispielsweise der Eingabetext einer am besten zur Frage passenden Kategorie von Inhaltsbausteinen zugeordnet werden. In der entsprechend ausgewählten Kategorie kann dann der am besten passende vorgegebene Inhaltsbaustein bzw. mehrere passende vorgegebene Inhaltsbausteine ausgewählt werden.

So können beispielsweise Zuordnungskriterien vorgegeben werden, die eine Zuordnung von Eingabeinhalten, Bestandteilen des Eingabeinhalts, von Analysen des Eingabeinhalts und/oder Bestandteilen der Analysen des Eingabeinhalts zu einer und/oder mehreren Kategorien von vorgegeben Inhaltsbausteinen ermöglichen. Mithilfe der Zuordnungskriterien kann auf diese Weise einem Eingabeinhalt wenigstens eine, insbesondere genau eine, Kategorie zugeordnet werden.

Des Weiteren können Zuordnungskriterien vorgegeben werden, um insbesondere nach Auswahl einer Kategorie einem Eingabeinhalt bzw. Eingabetext wenigstens einen vorgegebenen Inhaltsbaustein innerhalb der ausgewählten Kategorie zuzuordnen.

Vorzugsweise ist vorgesehen, dass wenigstens ein Verfahrensschritt mittels eines Computers durchgeführt wird.

Gemäß einem weiteren Aspekt der vorliegenden Erfindung wird eine Vorrichtung zur Datenverarbeitung umfassend Mittel zur Ausführung des vorschlagsgemäßen Verfahrens vorgeschlagen. Auf alle Ausführungen zum vorschlagsgemäßen Verfahren darf insoweit verwiesen werden. Insbesondere werden entsprechende Vorteile erzielt.

Gemäß einem weiteren Aspekt der vorliegenden Erfindung wird ein Computerprogramm, umfassend Befehle, die bei Ausführung des Computerprogramms durch einen Computer diesen veranlassen, ein vorschlagsgemäßes Verfahren auszuführen, vorgeschlagen. Auf alle Ausführungen zum vorschlagsgemäßen Verfahren darf insoweit verwiesen werden. Insbesondere werden entsprechende Vorteile erzielt.

Gemäß einem weiteren Aspekt der vorliegenden Erfindung wird ein, insbesondere nichtflüchtiger, computerlesbarer Datenträger, auf dem das vorschlagsgemäße Computerprogramm gespeichert ist, vorgeschlagen. Auf alle Ausführungen zum vorschlagsgemäßen Computerprogramm darf insoweit verwiesen werden. Insbesondere werden entsprechende Vorteile erzielt.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in beliebiger Kombination und/oder Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine schematische Ansicht einer vorschlagsgemäßen Vorrichtung zur Datenverarbeitung, die dazu ausgebildet ist, Lippenbewegungen und die akustische Ausgabe eines Inhalts durch einen Avatar zu synchronisieren, und
- Fig. 2: ein schematisches Ablaufdiagramm eines vorschlagsgemäßen Verfahrens zur Synchronisation von Lippenbewegungen und akustischer Ausgabe eines Inhalts durch einen Avatar bzw. einzelner Verfahrensschritte des vorschlagsgemäßen Verfahrens.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

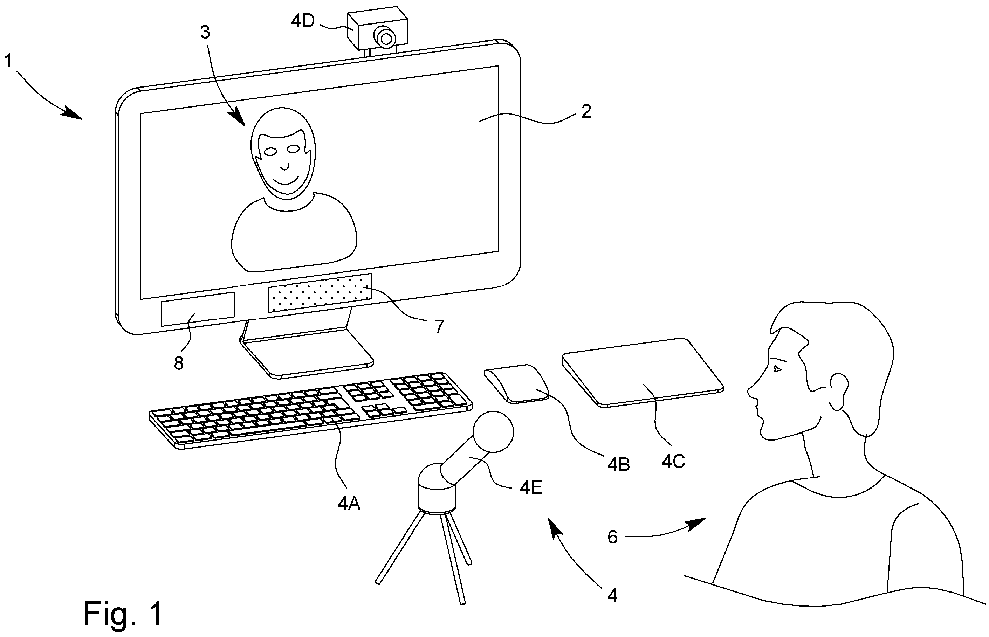

Fig. 1 zeigt eine schematische Ansicht einer Vorrichtung 1 zur Datenverarbeitung, insbesondere einen Computer. Bei der Vorrichtung 1 zur Datenverarbeitung kann es sich auch um ein Tablet, Mobiltelefon oder dergleichen handeln.

Die Vorrichtung 1 weist vorzugsweise eine visuelle Ausgabeeinrichtung, insbesondere Bildschirm 2, zur Anzeige bzw. Wiedergabe eines Avatars 3 auf. Der Bildschirm 2 ist insbesondere zur Wiedergabe von bewegten Bildern, insbesondere des Avatars 3, ausgebildet. Mittels des Bildschirms 2 können Bewegungen des Avatars 3 und insbesondere Bewegungen des Avatars 3 beim Sprechen, vorzugsweise ruckelfrei, dargestellt werden.

Des Weiteren weist die Vorrichtung 1 eine Eingabeeinrichtung 4 zur Eingabe eines Eingabeinhalts 5 auf. Die Eingabeeinrichtung 4 kann integraler Bestandteil der Vorrichtung 1 sein oder als separates Eingabegerät ausgebildet sein.

Die Eingabeeinrichtung 4 kann beispielsweise eine Tastatur 4A, eine Maus 4B, ein Touchpad/Trackpad 4C, eine Kamera 4D, ein Mikrofon 4E und/oder einen Touchscreen zur Eingabe des Eingabeinhalts 5 aufweisen.

Beispielsweise kann das Mikrofon 4E in die Kamera 4D integriert sein. Es ist alternativ oder zusätzlich möglich, dass der Bildschirm 2 als Touchscreen ausgebildet oder ein Touchscreen in den Bildschirm 2 integriert ist.

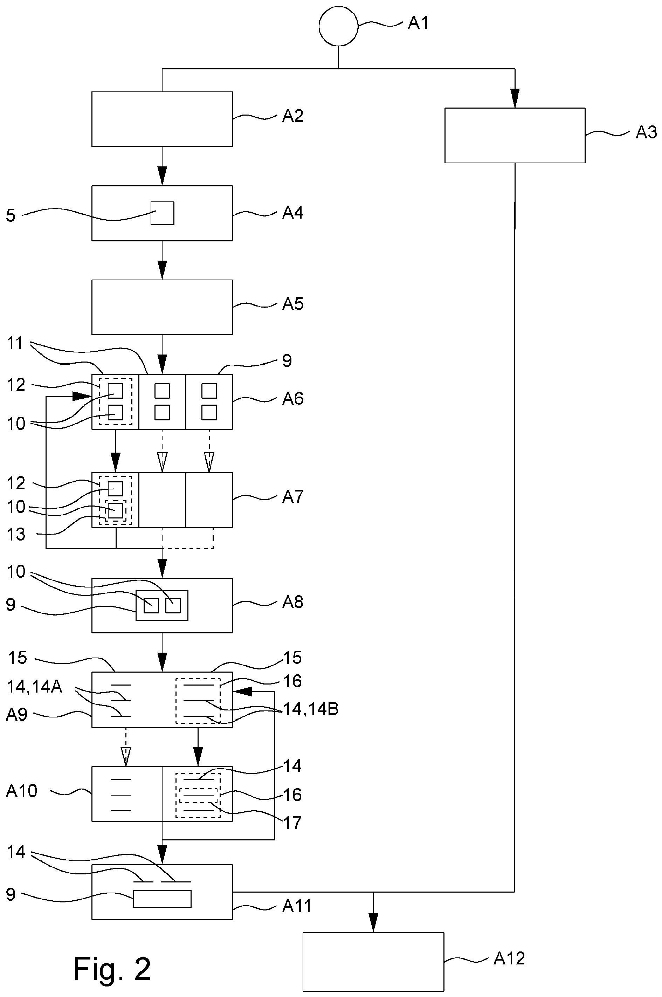

Ein Nutzer 6 kann über die Eingabeeinrichtung 4 einen Eingabeinhalt 5 (Fig. 2) eingeben. Bei dem Eingabeinhalt 5 kann es sich insbesondere um eine akustische Eingabe handeln, insbesondere mittels des Mikrofons 4E. So kann der Nutzer 6 beispielsweise eine Frage akustisch stellen oder akustisch um bestimmte Informationen bitten. Alternativ oder zusätzlich kann die Eingabe des Eingabeinhalts 5 auch mittels der Tastatur 4A, der Maus 4B, dem Touchpad/Trackpad 4C, der Kamera 4D und/oder dem Touchscreen erfolgen. Auch eine kombinierte akustische und motorische Eingabe mittels Mikrofon 4E und Tastatur 4A, Maus 4B, Tochpad 4C und/oder Touchscreen ist denkbar. Hier und vorzugsweise handelt es sich bei dem Eingabeinhalt 5 um einen, insbesondere ausgesprochenen, Text.

Die Vorrichtung 1, insbesondere eine Datenverarbeitungseinrichtung 7 der Vorrichtung 1, kann den Eingabeinhalt 5 analysieren und auf der Analyse basierend einen auszusprechenden Inhalt 9, insbesondere Text, erzeugen. Unter einer "Datenverarbeitungseinrichtung" ist im Rahmen der vorliegenden Erfindung eine Vorrichtung zur automatischen Verarbeitung von Daten, insbesondere Programmcode, zu verstehen. Die Datenverarbeitungseinrichtung 7 kann insbesondere einen Prozessor, Speicher, eine interne und/oder externe Datenbank und/oder eine Kommunikationseinrichtung zur Verbindung mit dem Internet und/oder anderen Computern aufweisen.

Unter dem Begriff "Inhalt" ist im Rahmen der vorliegenden Erfindung eine Information zu verstehen, die akustisch und/oder visuell darstellbar ist. So kann es sich bei dem Inhalt 9 beispielsweise um gesprochenen Text, Töne, Laute oder dergleichen handeln.

Die Vorrichtung 1 weist des Weiteren vorzugsweise eine akustische Ausgabeeinrichtung 8 zur akustischen Ausgabe des Inhalts 9 auf. Bei der akustischen Ausgabeeinrichtung 8 kann es sich beispielsweise um einen Lautsprecher handeln, der integraler Bestandteil der Vorrichtung 1 ist oder als separates Teil/Gerät der Vorrichtung 1 ausgebildet und/oder mit der Eingabeeinrichtung 4 kombiniert ist.

Über die Ausgabeeinrichtung 8 kann eine akustische Ausgabe des zuvor erzeugten Inhalts 9 durch den Avatar 3 erfolgen. Auf diese Weise kann eine Kommunikation zwischen dem Nutzer 6 und dem Avatar 3 ermöglicht werden.

Zur Unterstützung der akustischen Ausgabe des Inhalts 9 ist die Vorrichtung 1 vorzugsweise dazu ausgebildet, die Lippenbewegungen des Avatars 3 und die akustische Ausgabe des Inhalts 9 zu synchronisieren. Unter dem Begriff "Lippenbewegung" ist im Rahmen der vorliegenden Erfindung die Lippenbewegung und vorzugsweise die Mimik und/oder der Ausdruck des Gesichts des Avatars 3 bei der Aussprache des Inhalts 9 zu verstehen.

Der Nutzer 6 hört somit die akustische Ausgabe durch den Avatar 3 und sieht auf dem Bildschirm 2 eine zu der akustischen Ausgabe synchron laufende Lippenbewegung des Avatars 3. Auf diese Weise kann das Verständnis des Nutzers 6 erhöht und die Kommunikation zwischen dem Nutzer 6 und dem Avatar 3 verbessert werden.

Insbesondere ist vorgesehen, dass die Aussprache des Inhalts 9 an eine vorgegebene Lippenbewegungssequenz 14 des Avatars 3 angepasst wird. Unter dem Begriff "Lippenbewegungssequenz" ist im Rahmen der vorliegenden Erfindung eine über eine vorgegebene Zeitdauer andauernde Lippenbewegung zu verstehen.

Fig. 2 zeigt ein schematisches Ablaufdiagramm eines vorschlagsgemäßen Verfahrens zur Synchronisation von Lippenbewegungen und akustischer Ausgabe eines Inhalts 9 durch den Avatar 3 bzw. einzelner Verfahrensschritte des vorschlagsgemäßen Verfahrens.

Das Verfahren ist vorzugsweise mehrstufig bzw. mehrschrittig ausgebildet. Insbesondere weist das Verfahren mehrere Verfahrensschritte auf, wobei die einzelnen Verfahrensschritte grundsätzlich unabhängig voneinander und in beliebiger Reihenfolge durchgeführt werden können, sofern im Folgenden nicht anders erläutert.

Das vorschlagsgemäße Verfahren wird vorzugsweise mittels der Vorrichtung 1 zur Datenverarbeitung, insbesondere mittels der Eingabeausrichtung 4, des Bildschirms 2 und/oder der Ausgabeeinrichtung 8, durchgeführt.

Die Vorrichtung 1 zur Datenverarbeitung ist vorzugsweise zur Ausführung des hierin beschriebenen Verfahrens bzw. einzelner oder aller Verfahrensschritte ausgebildet.

Vorzugsweise sind die Befehle bzw. ist der Algorithmus zur Ausführung des vorschlagsgemäßen Verfahrens bzw. einzelner Verfahrensschritte des vorschlagsgemäßen Verfahrens elektronisch in einem (Daten-) Speicher der Vorrichtung 1, insbesondere der Datenverarbeitungseinrichtung 7, gespeichert.

Es ist jedoch auch möglich, dass ein oder mehrere Verfahrensschritte mittels einer (externen) Einrichtung bzw. eines (externen) Gerätes, durchgeführt werden und/oder einzelne oder mehrere Befehle zur Ausführung des Verfahrens bzw. einzelner Verfahrensschritte dort gespeichert sind.

Das vorschlagsgemäße Verfahren beinhaltet vorzugsweise einen oder mehrere Verfahrensschritte und/oder ein Programm, um Lippenbewegungen und die akustische Ausgabe eines Inhalts 9 durch den Avatar 3 zu synchronisieren.

Das vorschlagsgemäße Verfahren zeichnet sich dadurch aus, dass die Aussprache des Inhalts 9 an eine vorgegebene Lippenbewegungssequenz 14 des Avatars 3 angepasst wird. Auf diese Weise kann eine besonders schnelle und in besonders kurzer Zeit durchführbare Synchronisation zwischen den Lippenbewegungen und der akustischen Ausgabe eines Inhalts 9 durch den Avatar 3 erfolgen. Es ist dann möglich, eine akustische Ausgabe mit synchronen Lippenbewegungen durch den Avatar 3 ohne einen großen Zeitversatz und mit besonders wenig Rechenleistung durchzuführen.

Der Erfindung liegt die Erkenntnis zugrunde, dass lediglich 30 % aller Wörter anhand der bei der Aussprache dieser Wörter erfolgten Lippenbewegungen erkannt werden können. Darüber hinaus lassen sich lediglich 15 (Sprach-)Laute (Phoneme) zweifelsfrei einer definierten Lippenstellungen (Viseme) zuordnen. Es ist daher möglich, eine Vielzahl von Lauten (Phoneme) einer Lippenstellung (Visem) zuzuordnen. Gleichzeitig kann auch eine Vielzahl von Wörtern einer einzigen Lippenbewegung zugeordnet werden, ohne dass eine mangelnde Synchronisation zwischen einem ausgesprochenen Inhalt 9 und der Lippenbewegung für den Nutzer erkennbar ist.

Es ist dann insbesondere möglich, die Aussprache von verschiedenen Inhalten 9 an eine identische Lippenbewegungssequenz 14 des Avatars 3 anzupassen, wie nachfolgend noch im Einzelnen beschrieben wird. Auf diese Weise kann mit einer begrenzten Anzahl von Lippenbewegungssequenzen 14 eine deutlich höhere Anzahl von Inhalten 9 ausgegeben werden, wobei eine synchrone Ausgabe der gesprochenen Inhalte 9 mit den Lippenbewegungssequenzen erfolgt.

Das Verfahren wird vorzugsweise durch den Nutzer 6 gestartet, beispielsweise durch Öffnen eines entsprechenden Programms und/oder einer entsprechenden Internetseite und/oder Eingabe eines entsprechenden Befehls. Beispielsweise kann das Öffnen eines entsprechenden Programms oder die Eingabe eines entsprechenden Befehls durch den Nutzer 6 mittels der Eingabeeinrichtung 4 erfolgen, vorzugsweise in einem ersten Verfahrensschritt/Vorgang A1.

Der erste Verfahrensschritt/Vorgang A1 kann eine Begrüßung durch den Avatar 3, insbesondere eine an die jeweilige Situation angepasste Begrüßung, enthalten bzw. aufweisen. So kann beispielsweise die Begrüßung durch den Avatar 3 abhängig von der Tages- und/oder Jahreszeit erfolgen. Auch andere Einflussfaktoren auf die Begrüßung sind möglich.

Es ist auch möglich dass das Verfahren durch die Aussprache eines vorgegebenen Befehls durch den Nutzer 6 gestartet wird, beispielsweise durch die Aussprache von "Hallo Avatar".

Optional kann der Nutzer 6 in einem weiteren/zweiten Verfahrensschritt A2 über die Eingabeeinrichtung 4 einen Eingabeinhalt 5, insbesondere als gesprochenen Text, eingeben. Bei dem Eingabeinhalt 5 kann es sich um eine Frage, eine Bitte um Information und/oder eine Aussage handeln. Hier und vorzugsweise handelt es sich bei dem Eingabeinhalt 5 um eine Frage.

Der zweite Verfahrensschritt A2 weist vorzugsweise die Erfassung des, insbesondere akustischen, Eingabeinhalts 5 auf. Die Erfassung erfolgt insbesondere mittels der Eingabeeinrichtung 4.

Während der Eingabe des Eingabeinhalts 5 kann eine Vorverarbeitung erfolgen, um die Qualität der Erfassung zu verbessern und/oder die Erkennungsgenauigkeit des Eingabeinhalts 5 zu erhöhen. Dabei können beispielsweise Hintergrundgeräusche und Störungen eliminiert werden. Alternativ oder zusätzlich können bestimmte Frequenzen gefiltert werden, um irrelevante Frequenzen zu entfernen. Es ist zusätzlich oder alternativ auch möglich, den Lautstärkepegel des Tons zu standardisieren. Es ist zudem möglich, lediglich einzelne oder alle vorgenannten Vorverarbeitungen durchzuführen.

Der Eingabeinhalt 5 wird vorzugsweise aufgenommen, und/oder gespeichert, um eine im Folgenden beschriebene Bearbeitung durchzuführen.

In einem, insbesondere parallellaufenden, weiteren dritten Verfahrensschritt A3 wird vorzugsweise über den Bildschirm 2 der Avatar 3 angezeigt. Vorzugsweise wird der Avatar 3 im bewegten Zustand gezeigt, wobei eine natürliche zuhörende Bewegung des Avatars 3 dargestellt wird. Unter dem Begriff "natürliche zuhörende Bewegung" ist im Rahmen der vorliegenden Erfindung eine Bewegung einer natürlichen Person zu verstehen, die einem Nutzer 6 zuhört. Auf diese Weise wird von dem Avatar 3 ein natürliches Handeln bzw. eine natürliche Bewegung von einer real existierenden Person imitiert. Insbesondere führt der Avatar 3 während des dritten Verfahrensschritts A3 keine sprechenden oder sprechähnliche Lippenbewegungen durch.

Die Bewegung des Avatars 3 kann dabei an die verwendete Sprache des Nutzers 6 angepasst sein. So kann die vom Avatar 3 durchgeführte Bewegung bei einer vom Nutzer 6 verwendeten Sprache anders sein als bei einer anderen vom Nutzer 6 verwendeten Sprache. Auf diese Weise können sprachliche und/oder kulturelle Eigenschaften bzw. Unterschiede durch den Avatar 3 imitiert werden. Auf diese Weise kann die Kommunikation und/oder das Verständnis durch den Nutzer 6 insgesamt verbessert werden. Gleichzeitig kann für den Nutzer 6 eine als angenehm empfundene Atmosphäre geschaffen werden.

Es ist auch möglich, die vom Avatar 3 durchgeführten Bewegungen in Abhängigkeit von anderen Einflussfaktoren, wie beispielsweise die Tages- und/oder Jahreszeit, anzupassen.

In einem weiteren/vierten Verfahrensschritt A4 wird vorzugsweise die Eingabe bzw. der Eingabeinhalt 5 des Nutzers 6 analysiert.

So kann nach der Erfassung der Eingabe bzw. des Eingabeinhalts 5 und/oder nach Speicherung der Eingabe bzw. des Eingabeinhalts 5 (zweiter Verfahrensschritt A2) - zusätzlich oder alternativ zur Vorverarbeitung in Verfahrensschritt A2 - eine Verarbeitung erfolgen, um die Qualität des erfassten Eingabeinhalts 5 zu verbessern und die Erkennungsgenauigkeit des erfassten Eingabeinhalt 5 zu erhöhen. Dabei können beispielsweise Hintergrundgeräusche und Störungen eliminiert werden. Alternativ oder zusätzlich können bestimmte Frequenzen gefiltert werden, um irrelevante Frequenzen zu eliminieren. Es ist zusätzlich oder alternativ auch möglich, den Lautstärkepegel des Tons zu standardisieren. Es ist zudem möglich, lediglich einzelne oder alle vorgenannten Verarbeitungen durchzuführen, beispielsweise nacheinander, parallel und/oder iterativ.

Darüber hinaus kann im vierten Verfahrensschritt A4 nach phonetischen Übereinstimmungen und Mustern gesucht werden. Die Übereinstimmungen und Muster können dann mit in einer Datenbank gespeicherten Mustern abgeglichen werden, um wenigstens einzelne Bestandteile des Eingabeinhalts 5 zu identifizieren. Bei der Datenbank kann es sich um eine interne und/oder externe Datenbank, insbesondere einer cloudbasierten Datenbank, handeln. Die Datenbank kann als Speicher, insbesondere Festplatte, ausgebildet sein. Die Datenbank kann als Festplatte Bestandteil der Vorrichtung 1 sein, oder Bestandteil eines weiteren Computers sein.

Im vierten Verfahrensschritte A4 kann der insbesondere gesprochene Eingabeinhalt 5 in, insbesondere maschinenlesbaren, Text und/oder Code umgewandelt werden. Die Umwandlung kann mittels einer Voice2Text-Anwendung erfolgen. Bei der Voice2Text-Anwendung kann es sich insbesondere um eine Spracherkennung handeln, die gesprochenen Text transkribiert.

Es ist auch möglich, dass der vierte Verfahrensschritt A4 dazu ausgebildet ist, durch maschinelles Lernen und/oder künstliche Intelligenz die Spracherkennung zu unterstützen und/oder die Genauigkeit und Anpassungsfähigkeit der Bearbeitung zu verbessern.

Vorzugsweise wird in einem weiteren/fünften Verfahrensschritt A5 der logische Inhalt bzw. die Bedeutung des insbesondere transkribierten Eingabeinhalts 5 bzw. der Eingabetext analysiert. Dazu wird vorzugsweise ein Large Language Modul (LLM) verwendet. Unter dem Begriff "Large Language Modul" ist vorliegend ein generatives Sprachmodell für Texte bzw. textbasierte Inhalte zu verstehen. Large Language Moduls verwenden künstliche Intelligenz, künstliche neuronale Netzwerke und/oder Deep Learning, um natürliche Sprache zu verarbeiten, zu verstehen und/oder gegebenenfalls zu generieren. Entsprechende Sprachmodelle werden verwendet, um komplexe Texte, Fragen und/oder Anweisungen zu verstehen.

Hier und vorzugsweise wird der Eingabeinhalt 5 bzw. der Eingabetext anhand von Ausdrücken, Synonymen, Wörtern, Satzbestandteilen und/oder Sätzen mittels des Large Language Models analysiert. Mithilfe des Large Language Models kann somit der logische Inhalt bzw. die Bedeutung des Eingabeinhalts 5 des Nutzers 6 erfasst bzw. verstanden werden.

Nachfolgend wird vorzugsweise eine Reaktion bzw. Antwort auf den Eingabeinhalt 5 des Nutzers 6 generiert. Hierzu weist die Vorrichtung 1 bzw. das Programm oder die externe Datenbank mehrere hinterlegte vorgegebene Inhaltsbausteine 10 auf. Bei den vorgegebenen Inhaltsbausteinen 10 kann es sich um Antworten und/oder Informationen zu verschiedenen Themen handeln.

Bei den Inhaltsbausteinen 10 kann es sich um, beispielsweise durch Menschen, geprüfte und damit objektiv richtige Informationen bzw. Reaktionen handeln. Auf diese Weise können nur Informationen bzw. Reaktionen ausgegeben werden, die auf objektiv richtigen Inhaltsbausteinen 10 basieren. Es kann somit verhindert werden, dass erfundene und/oder nicht objektiv richtige Informationen bzw. Reaktionen durch den Avatar 3 bzw. die Vorrichtung 1 ausgegeben werden.

Vorzugsweise sind die vorgegebenen Inhaltsbausteine 10 in wenigstens zwei Kategorien 11 unterteilt. In Fig. 2 sind beispielhaft drei Kategorien 11 mit vorgegebenen Inhaltsbausteinen 10 dargestellt. Es ist jedoch auch möglich, dass mehr als drei verschiedene vorgegebene Kategorien vorgesehen sind. Insbesondere weist jede Kategorie mehrere, insbesondere mehr als zwei, Inhaltsbausteinen 10 auf.

Die Einteilung der vorgegebenen Inhaltsbausteine 10 in die Kategorien 11 kann thematisch erfolgen. So kann die eine Kategorie 11 vorgegebene Inhaltsbausteine 10 bezüglich eines Themas und eine andere Kategorie 11 vorgegebene Inhaltsbausteine 10 bezüglich eines anderen Themas enthalten.

Es ist auch möglich, dass ein Inhaltsbaustein 10 zwei Kategorien 11 zugeordnet ist oder jeweils in zwei unterschiedlichen Kategorien 11 enthalten ist.

Im sechsten Verfahrensschritt A6 wird vorzugsweise eine der vorgegebenen Kategorien 11 ausgewählt, wie in Fig. 2 durch die gestrichelte Linie 12 dargestellt ist. Insbesondere erfolgt die Auswahl der Kategorie 11 anhand der Analyse des Eingabeinhalts 5 bzw. der Analyse des Eingabetexts gemäß dem fünften Verfahrensschritt A5. Vorzugsweise kann die Kategorie 11 basierend auf der Analyse durch das Large Language Model erfolgen. Zur Beantwortung der Eingabe des Nutzers 6 bzw. als Reaktion auf den Eingabeinhalt 5 werden somit vorzugsweise ausschließlich Inhaltsbausteine 10 aus der entsprechend ausgewählten Kategorie 11 verwendet.

Anschließend kann in einem weiteren/siebten Verfahrensschritt A7 ein vorgegebener Inhaltsbaustein 10 oder mehrere vorgegebene Inhaltsbausteine 10 aus der ausgewählten Kategorie 11 ausgewählt bzw. identifiziert werden, wie in Fig. 2 durch die gestrichelte Linie 13 gezeigt ist. Die Auswahl des vorgegebenen Inhaltsbausteins 10 kann dabei vorzugsweise anhand der Analyse des Eingabeinhalts 5 bzw. basierend auf der Analyse durch das Large Language Model gemäß dem fünften Verfahrensschritt A5 erfolgen.

Die Inhaltsbausteine 10 und die Kategorien 11 können in einer Datenbank gespeichert bzw. hinterlegt sein. Die Datenbank kann insbesondere als Speicher(chip) und/oder Festplatte ausgebildet sein. Die Datenbank kann Bestandteil der Vorrichtung 1 bzw. als interne Datenbank ausgebildet sein. Es ist auch möglich, dass es sich bei der Datenbank um eine externe Datenbank handelt. Die Vorrichtung 1 kann dann beispielsweise über das Internet auf die Datenbank zugreifen.

Um auch komplexe Fragen beantworten zu können bzw. auf komplexe Eingabeinhalte 5 adäquat reagieren zu können, können die Verfahrensschritte A6 und A7 iterativ durchgeführt werden, wie in Fig. 2 gezeigt ist. Auf diese Weise können auch vorgegebene Inhaltsbausteine 10 aus unterschiedlichen Kategorien 11 verwendet werden, beispielsweise wenn der Eingabeinhalt 5 mehrere Fragen enthält oder zur Beantwortung des Eingabeinhalts 5 bzw. als Reaktion auf den Eingabeinhalt 5 Zugriff auf mehrere Kategorien 11 erforderlich ist.

In einem weiteren/achten Verfahrensschritt A8 können die ausgewählten vorgegebenen Inhaltsbausteine 10 bzw. der ausgewählte vorgegebene Inhaltsbaustein 10 zu einem auszusprechenden Inhalt 9 verarbeitet werden bzw. wird aus dem ausgewählten vorgegebenen Inhaltsbaustein 10 bzw. den ausgewählten vorgegebenen Inhaltsbausteinen 10 der auszusprechender Inhalt 9 formuliert. Bei dem auszusprechenden Inhalt 9 kann es sich um eine Antwort auf den Eingabeinhalt 5 bzw. Reaktion auf den Eingabeinhalt 5 handeln. Alternativ oder zusätzlich kann der auszusprechende Inhalt 9 einen Teil einer Antwort auf den Eingabeinhalt 5 bzw. einen Teil einer Reaktion auf den Eingabeinhalt 5 aufweisen.

Werden mehrere vorgegebene Inhaltsbausteine 10 ausgewählt, können diese einzeln weiterverarbeitet werden oder in einer an den Eingabeinhalt 5 angepassten Reihenfolge zu einer logischen Informationseinheit zusammengefasst bzw. aneinander angeordnet werden, um den auszusprechenden Inhalt 9 zu formulieren.

Im Anschluss kann in einem weiteren Verfahrensschritt, hier vorzugsweise in den Verfahrensschritten A9 und A10, eine vorgegebene Lippenbewegungssequenz 14 aus einer Mehrzahl von vorgegebenen Lippenbewegungssequenzen 14 ausgewählt werden.

Hier und vorzugsweise sind die vorgegebenen Lippenbewegungssequenzen 14 in wenigstens zwei Gruppen 15 von Lippenbewegungssequenzen 14 unterteilt.

Vorzugsweise werden die vorgegebenen Lippenbewegungssequenzen 14 in eine Gruppe von Kurzsequenzen 14A und in eine Gruppe von Langsequenzen 14B unterteilt. Bei den Kurzsequenzen 14A kann es sich insbesondere um die Darstellung von Lippenbewegungen von Halbsätzen, Nebensätzen, Satzabschnitten oder Kurzsätzen handeln. Hier und vorzugsweise weisen die Kurzsequenzen 14A eine Länge von 1,5 s bis 5 s, vorzugsweise von 1,5 s bis 4 s, weiter vorzugsweise von 2 s bis 3 s auf.

Bei den Langsequenzen 14B kann es sich insbesondere um die Darstellung von Lippenbewegungen von ganzen Sätzen und/oder Hauptsätzen handeln. Insbesondere können die Langsequenzen 14B eine Länge von 5 s bis 15 s, vorzugsweise von 5 s bis 13 s, weiter vorzugsweise von 6 s bis 12 s aufweisen.

Somit werden hier und vorzugsweise zwei Gruppen 15 von Lippenbewegungssequenzen 14 gebildet, wobei die Lippenbewegungssequenzen 14 anhand ihrer Dauer in eine der beiden Gruppen 15 eingeteilt werden. Es ist auch möglich, mehr als zwei Gruppen 15 auszubilden bzw. vorzusehen.

Im neunten Verfahrensschritt A9 wird vorzugsweise eine Gruppe 15 von Lippenbewegungssequenzen 14 ausgewählt, wie in Fig. 2 durch die gestrichelte Linie 16 gezeigt ist.

Insbesondere ist vorgesehen, dass die Auswahl der Gruppe 15 der vorgegebenen Lippenbewegungssequenzen 14 in Abhängigkeit von der Länge und/oder Anzahl der Wörter, der Anzahl der Vokale und/oder der Sprache des auszusprechenden Inhalts 9 erfolgt. So kann beispielsweise für einen auszusprechenden Satz mit wenigen Wörtern eine andere Gruppe 15 ausgewählt werden als für einen auszusprechenden Satz mit einer größeren Anzahl von Wörtern. Alternativ kann bei zwei Sätzen mit gleicher Wortanzahl jeweils eine unterschiedliche Gruppe 15 aufgrund unterschiedlicher Anzahl von Vokalen ausgewählt werden.

Es ist auch möglich, dass für einen vollständigen Satz oder einen Hauptsatz eine andere Gruppe 15 ausgewählt wird als für einen Nebensatz.

Nach Auswahl der Gruppe 15 kann wenigstens eine vorgegebene Lippenbewegungssequenz 14 in Abhängigkeit von der Länge und/oder Anzahl der Wörter, der Anzahl der Vokale und/oder der Sprache des auszusprechenden Inhalts 9 in einem weiteren/zehnten Verfahrensschritt A10 ausgewählt werden, wie durch die gestrichelte Linie 17 in Fig. 2 gezeigt ist.

So kann beispielsweise für einen auszusprechenden Satz mit wenigen Wörtern eine andere Lippenbewegungssequenz 14 ausgewählt werden als für einen auszusprechenden Satz mit einer größeren Anzahl von Wörtern. Alternativ kann bei zwei Sätzen mit gleicher Wortanzahl jeweils eine unterschiedliche Lippenbewegungssequenz 14 aufgrund einer unterschiedlichen Anzahl von Vokalen ausgewählt werden.

Bei komplexen und/oder langen auszusprechenden Inhalten 9 können die Verfahrensschritte A9 und A10 iterativ durchlaufen werden, um gegebenenfalls mehrere Lippenbewegungssequenzen 14 auszuwählen. Die ausgewählten Lippenbewegungssequenzen können dann zu einer einzigen Lippenbewegungssequenz 14 zusammengefügt werden.

Es ist vorzugsweise vorgesehen, dass die Anzahl der vorgegebenen Inhaltsbausteine 10 größer ist als die Anzahl der vorgegebenen Lippenbewegungssequenzen 14. Insbesondere ist die Anzahl der vorgegebenen Inhaltsbausteine 10 mehr als doppelt so groß, vorzugsweise mehr als viermal so groß, weiter vorzugsweise mehr als zehnmal so groß, weiter vorzugsweise mehr als einhundertmal so groß, weiter vorzugsweise mehr als eintausendmal so groß wie die Anzahl der vorgegebenen Lippenbewegungssequenzen 14. Es ist somit möglich, mit einer geringen Anzahl vorgegebener Lippenbewegungssequenzen 14 eine Vielzahl vorgegebener Inhaltsbausteine 10 als ausgesprochenen Inhalt 9 mit synchronen Lippenbewegungen durch einen Avatar 3 auszugeben, wie nachfolgend noch im Einzelnen erläutert wird.

Nach Abschluss des zehnten Verfahrensschritts A10 liegen somit vorzugsweise der auszusprechende Inhalt 9 und die ausgewählte Lippenbewegungssequenz 14 in einem nicht zueinander synchronisierten Zustand vor.

Im darauf folgenden/elften Verfahrensschritt A11 werden die akustische Ausgabe des Inhalts 9 und die visuelle Ausgabe, hier und vorzugsweise die Lippenbewegungen des Avatars 3, synchronisiert.

Im Stand der Technik werden die Lippenbewegungen des Avatars 3 an den auszusprechenden Inhalt 9 angepasst, was lange Verarbeitungszeiten erfordert. So kann es mit aktuellen Rechenleistungen bis zu einigen Minuten dauern, um Lippenbewegungen des Avatars 3 zu einem vorgegebenen Text bzw. auszusprechenden Inhalt 9 zu simulieren. Eine entsprechende Interaktion mit dem Avatar 3 ist entsprechend zeitaufwendig und mit langen Wartezeiten des Nutzers 6 zwischen Eingabe des Eingabeinhalts 5 und der akustischen Ausgabe des auszusprechenden Inhalts 9 durch den Avatar 3 verbunden. Entsprechende Systeme werden als zu lange dauernd und wenig komfortabel empfunden.

Hier und vorzugsweise ist vorgesehen, dass die Aussprache des Inhalts 9 an die vorgegebene Lippenbewegungssequenz 14 des Avatars 3 angepasst wird. Im Rahmen der vorliegenden Erfindung wird somit ein umgekehrter Ansatz verfolgt, die Lippenbewegungen und die Aussprache des Inhalts 9 zu synchronisieren.

Zur Synchronisation von Lippenbewegungen und der akustischen Ausgabe des Inhalts 9 durch den Avatar 3 kann die Betonung einzelner Laute, Silben, Buchstaben und/oder Wörter des Inhalts 9 an die vorgegebene Lippenbewegungssequenz 14 angepasst werden. So kann beispielsweise die Endung oder eine Silbe eines Wortes stärker oder weniger stark betont werden, um mit einem Abschnitt der vorgegebenen Lippenbewegungssequenz 14 (Viseme) übereinzustimmen.

Alternativ oder zusätzlich kann die Ausgabegeschwindigkeit von wenigstens einem Laut, einer Silbe, einem Buchstaben und/oder einem Wort an die vorgegebene Lippenbewegungssequenz 14 wenigstens passagenweise angepasst werden. So ist es beispielsweise möglich, die Ausgabegeschwindigkeit beispielsweise einer Silbe, eines Lautes und/oder einzelner Wörter an die vorgegebene Lippenbewegungssequenz 14 anzupassen, damit eine synchrone Ausgabe zwischen der Aussprache des Inhalts 9 und der vorgegebenen Lippenbewegungssequenz 14 erreicht wird.

Wird die Ausgabegeschwindigkeit von Tönen, gesprochenen Worten und/oder Lauten variiert, verändert sich in der Regel in Abhängigkeit von der Geschwindigkeitsdifferenz die Höhe bzw. die Frequenz der ausgegebenen Töne, gesprochenen Worte und/oder Lauten. Hier und vorzugsweise ist vorgesehen, dass die Höhe bzw. Frequenz des Tons, des gesprochenen Worts und/oder Lautes beibehalten wird, auch wenn sich die Ausgabegeschwindigkeit ändert. Wird beispielsweise die Ausgabegeschwindigkeit eines Wortes erhöht, würde sich damit einhergehend auch die Frequenz erhöhen. Durch die Anpassung der Höhe bzw. Frequenz kann die Wiedergabe dann vorzugsweise in der vorgegebenen Höhe erfolgen, so dass die vorgegebene Höhe bei der beschleunigten oder verlangsamten Ausgabe beibehalten wird. Auf diese Weise kann eine natürliche Betonung bei der Aussprache des Inhalts 9 auch bei unterschiedlichen Ausgabegeschwindigkeiten erzielt werden.

Alternativ oder zusätzlich ist es möglich, eine Pause zwischen Lauten, Wörtern und/oder Silben einzufügen und/oder an die vorgegebene Lippenbewegungssequenz 14 anzupassen. So kann beispielsweise zwischen zwei Wörtern eine Pause zusätzlich eingefügt oder verlängert werden, um eine synchrone Lippenbewegung des Avatars 3 zu den beiden ausgesprochenen Wörtern zu erhalten.

Alternativ ist es auch möglich, die Pause zwischen nacheinander auszusprechenden Silben, Lauten und/oder Wörtern zu verringern. So können beispielsweise nacheinander auszusprechende Wörter bei der Aussprache ineinander übergehen, um eine synchrone Lippenbewegung des Avatars 3 zu den beiden ausgesprochenen Wörtern zu erhalten.

Insbesondere können Zuordnungskriterien zwischen Lauten (Phonemen), Silben, Buchstaben, Wörtern und/oder Wortfolgen zu Lippenstellungen (Visemen) und/oder Passagen von Lippenbewegungen vorgegeben sein. Auf diese Weise ist es möglich, Lauten (Phonemen), Silben, Buchstaben, Wörtern und/oder Wortfolgen einzelnen Lippenstellungen (Visemen) und/oder Passagen von Lippenbewegungen zuzuordnen. Durch die Anpassung der Aussprache des Inhalts 9 kann somit eine Synchronisation zwischen den vorgegebenen Lippenbewegungssequenzen 14 und der Aussprache des Inhalts 9 erfolgen.

In einem anschließenden, weiteren/zwölften Verfahrensschritt A12 erfolgt die akustische und visuelle Ausgabe des Inhalts 9 und der Lippenbewegungssequenz 14 durch den Avatar 3 bzw. Bildschirm 2 und die Ausgabeeinrichtung 8. Dabei wird die Aussprache des Inhalts 9 synchron zur vorgegebenen Lippenbewegungssequenz 14 ausgegeben, wodurch das Verständnis des Nutzers 6 erhöht werden kann.

Hier und vorzugsweise kann es sich bei dem Avatar 3 um eine vorgegebene, real existierende oder fiktive Person handeln, beispielsweise um eine real existierende oder fiktive Apothekerin. Bei dem Nutzer 6 kann es sich beispielsweise um einen Patienten mit einem Rezept für ein individualisiertes Medikament handeln. Im Rahmen des Verfahrens kann der Nutzer 6 dann beispielsweise als Patient dem Avatar 3 als eine dem Nutzer 6 bekannte Apothekerin eine Frage bezüglich des Rezepts bzw. des Medikaments bzw. dessen Einnahme stellen. Hierfür kann der Nutzer 6 die Vorrichtung 1 nutzen und die Frage aussprechen oder anderweitig mittels der Eingabeeinrichtung 4 eingeben (Verfahrensschritt A2).

Der Eingabeinhalt 5 kann dann optional gespeichert werden und/oder bearbeitet werden (Verfahrensschritte A2 und A4). Die Frage des Nutzers 6 wird vorzugsweise in maschinenlesbaren Text bzw. Code umgewandelt (Verfahrensschritt A4) und mittels des Large Language Models analysiert, um den Eingabeinhalt 5 zu erkennen bzw. zu analysieren (Verfahrensschritt 5).

Anschließend kann zur Beantwortung der Frage wenigstens ein vorgegebener **In**haltsbaustein 10 ausgewählt bzw. verarbeitet werden, um einen auszusprechenden Inhalt 9 zu erzeugen (Verfahrensschritte A6 bis A8). Anhand des ausgewählten **In**haltsbausteins 10 kann wenigstens eine Lippenbewegungssequenz 14 ausgewählt werden (Verfahrensschritte A9 und A10). Der auszusprechende Inhalt 9 und die vorgegebene Lippenbewegungssequenz 14 werden anschließend zueinander synchronisiert, indem die Aussprache des Inhalts 9 an die vorgegebene Lippenbewegungssequenz 14 angepasst wird (Verfahrensschritt A11).

Die vorgenannten Verfahrensschritte zur Verarbeitung der Eingabe durch den Nutzer 6 und der Erzeugung des auszusprechenden Inhalts 9 sowie zur Synchronisation der Aussprache des Inhalts 9 und der vorgegebenen Lippenbewegungssequenz betragen vorzugsweise weniger als 1,0 s, weiter vorzugsweise weniger als 0,5 s, weiter vorzugsweise weniger als 0,4 s, weiter vorzugsweise weniger als 0,3 s.

Es ist dann möglich, innerhalb von weniger als 1,0 s eine Antwort durch den Avatar 3 auf eine Frage des Nutzers 6 auszugeben, wobei die Lippenbewegungen des Avatars 3 an die Aussprache des Inhalts 9 angepasst ist (Verfahrensschritt A12). Auf diese Weise kann ein Gespräch ohne eine als vom Nutzer 6 störend empfundene Pause zwischen der Frage und einer Antwort durch den Avatar 3 erfolgen.

Während der Eingabe und/oder bis zur Wiedergabe der Aussprache des Inhalts 9 mit synchronen Lippenbewegungen kann der Avatar 3 natürliche zuhörende Bewegungen ausführen, wodurch eine vertraute Atmosphäre für den Nutzer 6 geschaffen wird.

Bei dem Avatar 3 kann es sich auch um einen realen oder fiktiven Mitarbeiter einer Firma, beispielsweise aus der Personalabteilung handeln. Der Nutzer 6 kann ebenfalls ein Mitarbeiter derselben Firma sein. Der Nutzer 6 kann mittels des Verfahrens und/oder der Vorrichtung 1 auf besonders einfache Weise relevante betriebsbezogene Fragen in kurzer Zeit beantwortet bekommen, ohne andere Mitarbeiter von ihrer Arbeit abzuhalten bzw. abzulenken. So kann beispielsweise eine Frage, wie ein Urlaubsantrag auszufüllen ist, oder wie viele Urlaubstage dem Nutzer 6 noch zustehen, in besonders schneller und einfacher Weise beantwortet werden. Es sind auch andere Anwendungsfälle bzw. Konstellationen möglich.

Ein weiterer Aspekt der vorliegenden Erfindung betrifft ein Computerprogramm, umfassend Befehle, die bei Ausführung des Computerprogramms durch einen Computer bzw. die erfindungsgemäße Vorrichtung 1 diesen veranlassen, das vorschlagsgemäßes Verfahren auszuführen. Auf alle Ausführungen zum vorschlagsgemäßen Verfahren darf insoweit verwiesen werden. Insbesondere werden entsprechende Vorteile erzielt.

Ein weiterer Aspekt der vorliegenden Erfindung betrifft einen computerlesbaren Datenträger, auf dem das vorschlagsgemäße Computerprogramm gespeichert ist. Auf alle Ausführungen zum vorschlagsgemäßen Computerprogramm darf insoweit verwiesen werden. Insbesondere werden entsprechende Vorteile erzielt.

### Bezugszeichenliste:

- 1: Vorrichtung
- 2: Bildschirm
- 3: Avatar
- 4: Eingabeeinrichtung
- 4A: Tastatur
- 4B: Maus
- 4C: Touchpad
- 4D: Kamera
- 4E: Mikrofon
- 5: Eingabeinhalt
- 6: Nutzer
- 7: Datenverarbeitungseinrichtung
- 8: Ausgabeeinrichtung
- 9: Inhalt
- 10: Inhaltsbaustein
- 11: Kategorie
- 12: Linie
- 13: Linie
- 14: Lippenbewegungssequenz
- 14A: Kurzsequenz
- 14B: Langsequenz
- 15: Gruppe
- 16: Linie
- 17: Linie
- A1 - A12: Verfahrensschritte

## Patentansprüche

1. Verfahren zur Synchronisation von Lippenbewegungen und akustischer Ausgabe eines Inhalts (9) durch einen Avatar (3),
wobei ein auszusprechender Inhalt (9) erzeugt wird,
**dadurch gekennzeichnet,**
**dass** die Aussprache des Inhalts (9) an eine vorgegebene Lippenbewegungssequenz (14) des Avatars (3) angepasst wird.

2. Verfahren nach Anspruch 1, **dadurch gekennzeichnet, dass** die Betonung einzelner Laute, Silben, Buchstaben und/oder Wörter des Inhalts (9) an die vorgegebene Lippenbewegungssequenz (14) angepasst wird, und/oder
dass die Ausgabegeschwindigkeit von wenigstens einem Laut, einer Silbe, einem Buchstaben und/oder einem Wort an die vorgegebene Lippenbewegungssequenz (14) wenigstens passagenweise angepasst wird, und/oder
dass wenigstens eine Pause zwischen Lauten, Wörtern und/oder Silben eingefügt und/oder an die vorgegebene Lippenbewegungssequenz (14) angepasst wird.

3. Verfahren nach Anspruch 1 oder 2, **dadurch gekennzeichnet, dass** definierte Laute, Silben, Buchstaben und/oder Wörter einer definierten Lippenbewegung und/oder definierten Lippenstellungen zugeordnet werden, vorzugsweise dass die Ausgabegeschwindigkeit, Betonung und/oder Pausen zwischen den definierten Lauten, Silben, Buchstaben und/oder Wörtern an die vorgegebene Lippenbewegungssequenz (14) angepasst werden.

4. Verfahren nach einem der voranstehenden Ansprüche, **dadurch gekennzeichnet, dass** die vorgegebene Lippenbewegungssequenz (14) aus einer Mehrzahl von vorgegebenen Lippenbewegungssequenzen (14) ausgewählt wird.

5. Verfahren nach Anspruch 4, **dadurch gekennzeichnet, dass** die Auswahl der vorgegebenen Lippenbewegungssequenz (14) in Abhängigkeit von der Länge und/oder Anzahl der Wörter, der Anzahl der Vokale und/oder der Sprache des Inhalts (9) erfolgt.

6. Verfahren nach einem der voranstehenden Ansprüche, **dadurch gekennzeichnet, dass** der Inhalt (9) aus einer Mehrzahl von vorgegebenen Inhaltsbausteinen (10) ausgewählt und/oder generiert wird, vorzugsweise dass die Anzahl der vorgegeben Inhaltsbausteine (10) größer ist als die Anzahl der vorgegebenen Lippenbewegungssequenzen (14), vorzugsweise, dass die Anzahl der vorgegeben Inhaltsbausteine (10) mehr als doppelt so groß, weiter vorzugsweise mehr als viermal so groß, weiter vorzugsweise mehr als zehnmal so groß, weiter vorzugsweise mehr als einhundertmal so groß, weiter vorzugsweise mehr als eintausendmal so groß, ist wie die Anzahl der vorgegebenen Lippenbewegungssequenzen (14).

7. Verfahren nach einem der voranstehenden Ansprüche, **dadurch gekennzeichnet, dass** die vorgegebenen Lippenbewegungssequenzen (14) in eine Gruppe (15) von Kurzsequenzen (14A) und eine Gruppe (15) von Langsequenzen (14B) unterteilt sind/werden, vorzugsweise, dass die Kurzsequenzen (14A) eine Länge zwischen 1,5 s und 5 s, vorzugsweise zwischen 1,5 s und 4 s, weiter vorzugsweise zwischen 2 s und 3 s, aufweisen, und/oder dass die Langsequenzen (14B) eine Länge von 5 s bis 15 s, weiter vorzugsweise von 5 s bis 13 s, weiter vorzugsweise von 6 bis 12 s, aufweisen.

8. Verfahren nach einem der voranstehenden Ansprüche, **dadurch gekennzeichnet, dass** der Inhalt (9) eine Antwort und/oder Reaktion und/oder einen Teil einer Antwort und/oder Reaktion auf einen Eingabeinhalt (5) ist oder aufweist, vorzugsweise dass der Eingabeinhalt (5), insbesondere in Sprachform, von einem Nutzer (6) eingegeben wird und in einen Eingabetext und/oder Binärcode umgewandelt wird, oder dass der Eingabeinhalt (5) in Textform als Eingabetext und/oder als Binärcode eingegeben wird.

9. Verfahren nach Anspruch 8, **dadurch gekennzeichnet, dass** der Eingabeinhalt (5) anhand von Wörtern, Ausdrücken und/oder Synonymen, insbesondere mittels eines Large-Language-Moduls, analysiert wird.

10. Verfahren nach Anspruch 6 oder nach einem der auf Anspruch 6 rückbezogenen Ansprüche 7 bis 9, **dadurch gekennzeichnet, dass** ein vorgegebener Inhaltsbaustein (10) oder Teile hiervon basierend auf der Analyse des Eingabeinhalts (5) ausgewählt wird.

11. Verfahren nach Anspruch 10, **dadurch gekennzeichnet, dass** die vorgegebenen Inhaltsbausteine (10) in wenigstens zwei thematische Kategorien (11) eingeteilt sind, vorzugsweise dass anhand der Analyse des Eingabeinhalts (5) eine Kategorie (11) zur Auswahl eines vorgegebenen Inhaltsbausteins (10) aus dieser Kategorie (11) ausgewählt wird.

12. Verfahren nach einem der voranstehenden Ansprüche, **dadurch gekennzeichnet, dass** wenigstens ein Verfahrensschritt mittels eines Computers ausgeführt wird.

13. Vorrichtung zur Datenverarbeitung umfassend Mittel zur Ausführung eines Verfahrens nach einem der voranstehenden Ansprüche.

14. Computerprogramm, umfassend Befehle, die bei Ausführung des Computerprogramms durch einen Computer diesen veranlassen, ein Verfahren nach einem der Ansprüche 1 bis 13 auszuführen.

15. Computerlesbarer Datenträger, auf dem das Computerprogramm nach Anspruch 14 gespeichert ist.

## Claims

1. A method for synchronizing lip movements and acoustic output of a content (9) by an avatar (3),
wherein a content (9) to be spoken is generated,
**characterized in that**
the pronunciation of the content (9) is adapted to a predetermined lip movement sequence (14) of the avatar (3).

2. The method according to claim 1, **characterized in that** the emphasis of individual sounds, syllables, letters and/or words of the content (9) is adapted to the predetermined lip movement sequence (14), and/or
the output speed of at least one sound, a syllable, a letter and/or a word is adapted to the predetermined lip movement sequence (14) at least in sections, and/or
at least one pause between sounds, words and/or syllables is inserted and/or adapted to the predetermined lip movement sequence (14).

3. The method according to claim 1 or 2, **characterized in that** defined sounds, syllables, letters and/or words are assigned to a defined lip movement and/or defined lip positions, preferably that the output speed, emphasis and/or pauses between the defined sounds, syllables, letters and/or words are adapted to the predetermined lip movement sequence (14).

4. The method according to one of the preceding claims, **characterized in that** the predetermined lip movement sequence (14) is selected from a plurality of predetermined lip movement sequences (14).

5. The method according to claim 4, **characterized in that** the selection of the predetermined lip movement sequence (14) takes place depending on the length and/or number of words, the number of vowels and/or the language of the content (9).

6. The method according to one of the preceding claims, **characterized in that** the content (9) is selected and/or generated from a plurality of predetermined content modules (10), preferably that the number of predetermined content modules (10) is greater than the number of predetermined lip movement sequences (14), preferably that the number of predetermined content modules (10) is more than twice as great, further preferably more than four times as great, further preferably more than ten times as great, further preferably more than one hundred times as great, further preferably more than one thousand times as great, as the number of predetermined lip movement sequences (14).

7. The method according to one of the preceding claims, **characterized in that** the predetermined lip movement sequences (14) are divided into a group (15) of short sequences (14A) and a group (15) of long sequences (14B), preferably that the short sequences (14A) have a length between 1.5 s and 5 s, preferably between 1.5 s and 4 s, further preferably between 2 s and 3 s, and/or that the long sequences (14B) have a length of 5 s to 15 s, further preferably of 5 s to 13 s, further preferably of 6 to 12 s.

8. The method according to one of the preceding claims, **characterized in that** the content (9) is or has a response and/or reaction and/or a part of a response and/or reaction to an input content (5), preferably that the input content (5), in particular in speech form, is input by a user (6) and is converted into an input text and/or binary code, or that the input content (5) is input in text form as input text and/or as binary code.

9. The method according to claim 8, **characterized in that** the input content (5) is analyzed on the basis of words, expressions and/or synonyms, in particular by means of a large-language module.

10. The method according to claim 6 or according to one of claims 7 to 9 referring back to claim 6, **characterized in that** a predetermined content module (10) or parts thereof is selected based on the analysis of the input content (5).

11. The method according to claim 10, **characterized in that** the predetermined content modules (10) are divided into at least two thematic categories (11), preferably that a category (11) for selecting a predetermined content module (10) from this category (11) is selected on the basis of the analysis of the input content (5).

12. The method according to one of the preceding claims, **characterized in that** at least one method step is carried out by means of a computer.

13. A device for data processing comprising means for carrying out a method according to one of the preceding claims.

14. A computer program comprising commands which, when the computer program is executed by a computer, cause the latter to carry out a method according to one of claims 1 to 13.

15. A computer-readable data carrier on which the computer program according to claim 14 is stored.

## Revendications

1. Procédé de synchronisation des mouvements des lèvres et de la sortie acoustique d'un contenu (9) par un avatar (3),
dans lequel un contenu (9) à prononcer est généré,
**caractérisé en ce que**
la prononciation du contenu (9) est adaptée à une séquence de mouvements des lèvres (14) prédéterminée de l'avatar (3).

2. Procédé selon la revendication 1, **caractérisé en ce que** l'accentuation de sons, de syllabes, de lettres et/ou de mots individuels du contenu (9) est adaptée à la séquence de mouvements des lèvres (14) prédéterminée, et/ou
la vitesse de sortie d'au moins un son, une syllabe, une lettre et/ou un mot est adaptée à la séquence de mouvements des lèvres (14) prédéterminée au moins par sections, et/ou
au moins une pause entre des sons, des mots et/ou des syllabes est insérée et/ou adaptée à la séquence de mouvements des lèvres (14) prédéterminée.

3. Procédé selon la revendication 1 ou 2, **caractérisé en ce que** des sons, des syllabes, des lettres et/ou des mots définis sont associés à un mouvement des lèvres défini et/ou à des positions des lèvres définies, de préférence **en ce que** la vitesse de sortie, l'accentuation et/ou les pauses entre les sons, syllabes, lettres et/ou mots définis sont adaptées à la séquence de mouvements des lèvres (14) prédéterminée.

4. Procédé selon l'une quelconque des revendications précédentes, **caractérisé en ce que** la séquence de mouvements des lèvres (14) prédéterminée est sélectionnée parmi une pluralité de séquences de mouvements des lèvres (14) prédéterminées.

5. Procédé selon la revendication 4, **caractérisé en ce que** la sélection de la séquence de mouvements des lèvres (14) prédéterminée s'effectue en fonction de la longueur et/ou du nombre de mots, du nombre de voyelles et/ou de la langue du contenu (9).

6. Procédé selon l'une quelconque des revendications précédentes, **caractérisé en ce que** le contenu (9) est sélectionné et/ou généré à partir d'une pluralité de modules de contenu (10) prédéterminés, de préférence **en ce que** le nombre de modules de contenu (10) prédéterminés est supérieur au nombre de séquences de mouvements des lèvres (14) prédéterminées, de préférence **en ce que** le nombre de modules de contenu (10) prédéterminés est plus de deux fois plus grand, de manière davantage préférée plus de quatre fois plus grand, de manière davantage préférée plus de dix fois plus grand, de manière davantage préférée plus de cent fois plus grand, de manière davantage préférée plus de mille fois plus grand que le nombre de séquences de mouvements des lèvres (14) prédéterminées.

7. Procédé selon l'une quelconque des revendications précédentes, **caractérisé en ce que** les séquences de mouvements des lèvres (14) prédéterminées sont divisées en un groupe (15) de séquences courtes (14A) et un groupe (15) de séquences longues (14B), de préférence **en ce que** les séquences courtes (14A) présentent une longueur comprise entre 1,5 s et 5 s, de préférence entre 1,5 s et 4 s, de manière davantage préférée entre 2 s et 3 s, et/ou **en ce que** les séquences longues (14B) présentent une longueur de 5 s à 15 s, de manière davantage préférée de 5 s à 13 s, de manière davantage préférée de 6 à 12 s.

8. Procédé selon l'une quelconque des revendications précédentes, **caractérisé en ce que** le contenu (9) est ou présente une réponse et/ou une réaction et/ou une partie d'une réponse et/ou d'une réaction à un contenu d'entrée (5), de préférence **en ce que** le contenu d'entrée (5), en particulier sous forme vocale, est entré par un utilisateur (6) et est converti en un texte d'entrée et/ou en un code binaire, ou **en ce que** le contenu d'entrée (5) est entré sous forme de texte en tant que texte d'entrée et/ou en tant que code binaire.

9. Procédé selon la revendication 8, **caractérisé en ce que** le contenu d'entrée (5) est analysé sur la base de mots, d'expressions et/ou de synonymes, en particulier au moyen d'un module de grande langue.

10. Procédé selon la revendication 6 ou selon l'une quelconque des revendications 7 à 9 se référant à la revendication 6, **caractérisé en ce qu'**un module de contenu (10) prédéterminé ou des parties de celui-ci sont sélectionnés sur la base de l'analyse du contenu d'entrée (5).

11. Procédé selon la revendication 10, **caractérisé en ce que** les modules de contenu (10) prédéterminés sont divisés en au moins deux catégories thématiques (11), de préférence **en ce qu'**une catégorie (11) pour sélectionner un module de contenu (10) prédéterminé parmi cette catégorie (11) est sélectionnée sur la base de l'analyse du contenu d'entrée (5).

12. Procédé selon l'une quelconque des revendications précédentes, **caractérisé en ce qu'**au moins une étape de procédé est réalisée au moyen d'un ordinateur.

13. Dispositif de traitement de données comprenant des moyens pour réaliser un procédé selon l'une quelconque des revendications précédentes.

14. Programme informatique comprenant des instructions qui, lorsque le programme informatique est exécuté par un ordinateur, amènent celui-ci à réaliser un procédé selon l'une quelconque des revendications 1 à 13.

15. Support de données lisible par ordinateur sur lequel est stocké le programme informatique selon la revendication 14.
